# EUROPÄISCHE PATENTANMELDUNG

(11) **EP 0 548 638 A1**
(43) Veröffentlichungstag der Anmeldung: **30.06.1993**
(21) Anmeldenummer: 92120781.7
(22) Anmeldetag: 05.12.1992
(51) Int. Cl.: G11B 23/037, G11B 15/66, B65H 18/10

(54) **Wickelkern-Spannvorrichtung**

(30) Priorität: 20.12.1991 DE 9115828 U
(71) Anmelder: BASF Magnetics GmbH, D-68165 Mannheim (DE)
(72) Erfinder: Scholtysik, Bernd, Dr., W-8000 München 80 (DE); Liepold, August, W-8000 München 70 (DE); Toral, Jose, W-8000 München 70 (DE); Baumann, Manfred, W-8000 München 40 (DE)
(74) Vertreter: Langfinger, Klaus-Dieter, Dr.

(57) **Zusammenfassung**

Die Neuerung betrifft eine Spannvorrichtung zum Aufspannen von Wickelkernen (1) auf eine Wickelrolle (9). Dabei hat jeder Wickelkern (1) an seinem Innenumfang (3) benachbart der inneren Bohrung eine Vielzahl federelastischer Elemente in Gestalt eines abgeknickten Armes (2), welcher in einem radial vorstehenden Sporn (7) endet und wobei die Wickelrolle (9) axial verlaufende Stufen (8) enthält, die mit den federelastischen Armen (2) einrastbar und antreibbar zusammenwirken.

## Beschreibung

Die Neuerung betrifft eine Spannvorrichtung für Wickelkerne, bestehend aus einer Wickelwelle mit auf ihr drehbar und antreibbar gelagerten Einzelwickelkörpern für Wickelkerne mit inneren zylindrischen Bohrungen, wobei die Spannvorrichtung Maßnahmen zum Einrasten der Wickelkerne in axialer Richtung auf jedem Einzelwickelkörper enthält.

In Wickelmaschinen, insbesondere in kombinierten Längsschneide- und Wickelvorrichtungen, beispielsweise für Magnetbänder, nehmen die Wickelwellen jeweils eine Vielzahl von Wickelkernen auf. Das Bestücken der Wickelwellen mit Wickelkernen ist problematisch, denn die zahlreichen bewickelten Kerne sollen möglichst schnell von der Wickelwelle abgezogen und durch leere Wickelkerne positionsrichtig ersetzt werden. Die Spannvorrichtung soll beim Bestücken ein leichtes und störungsfreies Verschieben der Wickelkerne auf der Welle nicht behindern. Daher kennt man bereits zahlreiche Spannvorrichtungen an der Wickelwelle, wie Spannrollen, Spannstifte oder dergleichen, welche mechanisch aufwendige Konstruktionen darstellen, die die Kosten der Wickelwelle in die Höhe treiben. Die Schwierigkeiten werden um so größer, wenn Einzelwickelkörper mit gesonderten Friktionen eingesetzt werden.

In der Anmeldung P 41 21 244 der Anmelderin werden einige aus dem Stand der Technik bekannte Spannvorrichtungen ausführlich beschrieben. Ebenso ist in der genannten Anmeldung eine Wickelkern-Spannvorrichtung des oben genannten gattungsmäßigen Typs beschrieben, bei der die Spannvorrichtung über den Umfang jedes zylindrischen Einzelwickelkörpers verteilt mehrere Segmente enthält, welche in einer Ringnut sitzen und durch Federelemente belastet sind. Weiterhin ist in dieser Anmeldung in den Figuren 6 und 7 eine Einschnapp- beziehungsweise Zentriervorrichtung für Wickelkerne dargestellt, bestehend aus einem Wulst sowie einem Kugeldruckstück an der Außenseite der Spannvorrichtung, welche ein axiales Aufschieben der Wickelkerne sowie ein Zentrieren ermöglichen.

Die genannten Spannvorrichtungen weisen einige Nachteile auf. Einmal ist gewöhnlich eine genaue seitliche Fixierung der Wickelkerne nicht vorhanden. Zum anderen benötigen die radial wirkenden Spannelemente in der Kernaufnahme einen gewissen Bauraum, der konstruktiv oft nur schwer zu verwirklichen ist, da in der Kernaufnahme außerdem eine möglichst exakte stabile Lagerung und zur Drehmomenterzeugung geeignete Einrichtungen, zum Beispiel Wirbelstrom-Kupplungen, zum Antrieb der Einzelwickelelemente unterzubringen sind.

Weiterhin ist eine Zentriervorrichtung für Wickelkerne bekannt, bei welcher jeder Wickelkern in seiner Kernbohrung eine Mittelkerbe besitzt, in welche ein dazu komplementärer Vorsprung an der Spannvorrichtung eingreift. Dabei hat sich gezeigt, daß Wickelkerne mit einer Kerbe spritztechnisch schwer herstellbar, da nicht einfach entformbar, sind und die Herstellung einer Kerbe durch zerspanende Bearbeitung, beispielsweise durch Drehen, sehr aufwendig und teuer ist.

Die Aufgabe der Neuerung bestand darin, eine Spannvorrichtung der eingangs genannten gattungsmäßigen Art zu finden, welche einen möglichst einfachen Aufbau hat, wobei die Wickelkerne auf einfache und sichere Weise auf die Einzelwickelkörper axial aufschiebbar und nach dem Bewickeln auch wieder abnehmbar sind und wobei auch bei hohen Wickelgeschwindigkeiten die Kerne auf der Spannvorrichtung ohne Taumeln zentriert sitzen.

Neuerungsgemäß wurde die Aufgabe gelöst mit einer Spannvorrichtung für Wickelkerne mit den im kennzeichnenden Teil des Anspruchs 1 genannten Merkmalen. Weitere Einzelheiten der Neuerung gehen aus den Unteransprüchen, den Zeichnungen sowie der Beschreibung hervor. Nachstehend wird die Neuerung anhand der Zeichnungen näher erläutert und zwar zeigt
- Figur 1: einen neuerungsgemäßen Wickelkern in Draufsicht
- Figur 2: einen Querschnitt durch einen Wickelkern gemäß Figur 1, welcher auf eine Kernaufnahme aufgeschoben ist,
- Figur 3: eine Ausführung der Kernaufnahme zum Aufschieben der Wickelkerne gemäß Figur 1 und 2 im Längsschnitt
- Figur 4: eine weitere Ausführung der Kernaufnahme im Längsschnitt.

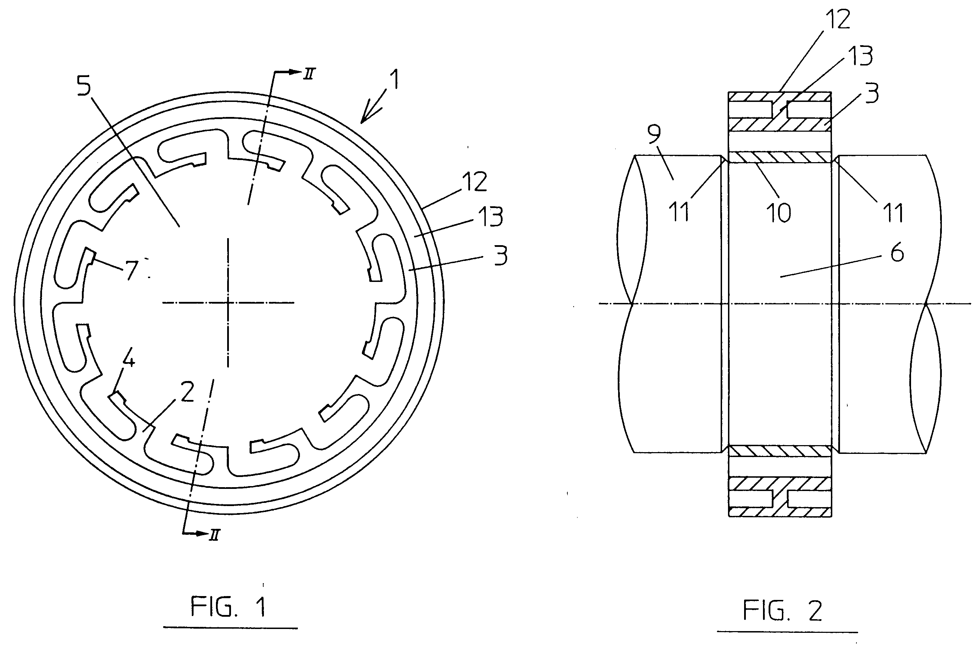

Wie aus den Figuren 1 und 2 zu ersehen, besteht der neuerungsgemäße Wickelkern (1) aus einem Außenteil mit der kreisringzylindrischen zum Bewickeln mit Magnetband dienenden Fläche (12), einem weiteren inneren Kreisringzylinder (3) und einem dazwischen liegenden radialen Steg (13) als Versteifungsrippe, so daß dieser Wickelkern ein doppel-T-Profil hat. Derartige Wickelkerne sind bereits in der Anmeldung p 41 05 604 der gleichen Anmelderin beschrieben.

Von dem oben beschriebenen inneren Kreisring (3) gehen eine Vielzahl von über den Umfang des Wickelkerns verteilten federelastischen Elemente (2) aus, welche die Gestalt eines abgeknickten Arms besitzen, der in radialer Richtung vom Innenumfang (3) des Wickelkerns ausgeht und in Umfangsrichtung abgeknickt ist, wobei jeweils die Enden (4) jedes Arms (2) von der Knickstelle des nächstfolgenden Arms (2) beabstandet sind. Die federelastischen Arme können entweder gleichsinnig in Umfangsrichtung oder jeweils gegeneinander verlaufen. In einer bevorzugten Ausführungsform ist jeweils das Ende (4) des federelastischen Arms (2) mit einem radial vorstehenden Sporn (7) versehen. Beim Bewickeln des Kerns beispielsweise mit Magnetband wird der Kern zusammengedrückt, so daß vor dem Bewickeln der Kern auf der Kernaufnahme (6) lediglich mit dem Sporn (7) am Federarmende aufliegt, während beim vollständig bewickelten Kern dieser sowohl am Armknick wie auch am Sporn aufliegt, so daß ein guter Kontakt von Kern und Wickelwelle (9) beziehungsweise Kernaufnahme (6) gewährleistet ist.

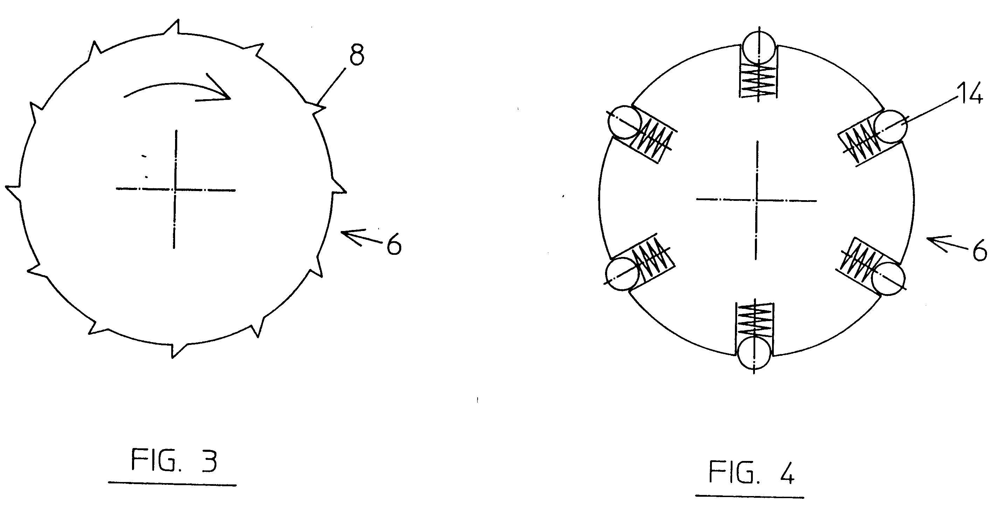

Der Außenumfang der Kernaufnahme 6 kann (Figur 3) mit Stufen (8) versehen sein, welche rastbar und antreibbar mit den federelastischen Armen (2) oder mit den Spornen (7) zusammenwirken, um eine gute Drehmomentübertragung der Wickelwelle auf die Wickelkerne zu gewährleisten.

Zur Übertragung des Drehmoments von der Kernaufnahme auf den Wickelkern können auch andere geeignete Einrichtungen dienen, zum Beispiel ein oder mehrere Kugeldruckstücke (14), die in den Raum zwischen zwei benachbarten Federarmen (2) des Wickelkerns einrasten (Figur 4). Wenn die Federkraft der Federarme (2) ausreichend groß ist, kann auch der Kraftschluß zur Kernaufnahme zur Drehmomentübertragung ausreichend sein.

Wenn die fertig bewickelten Kerne, welche beispielsweise mit streifenförmigen Magnetbändern bewickelt sind (sogenannte Pancakes), beim Kunden zur Weiterverarbeitung ankommen, werden sie zum Abwickeln auf Aufnahmeachsen gesteckt, welche beispielsweise beim Gebrauch sogenannter NAB-Wickelkerne drei jeweils um 120° gegeneinander versetzte auf der Achse sitzende Mitnehmerelemente enthalten. Beim neuerungsgemäßen Wickelkern ist die Anordnung der Federarme (2) und deren Abstand voneinander so beschaffen, daß die Wickelkerne auf derartige Aufnahmeachsen aufsteckbar sind, wobei die beschriebenen Vorsprünge (Mitnehmerelemente) jeweils in die Abstände zweier Arme hineinpassen.

Beim axialen Aufschieben jedes Wickelkerns auf die Einzelwickelkörper (9) der Kernaufnahme (6) besitzt diese eine kreisringzylindrische Vertiefung (10), die aus Figur 2 hervorgeht und deren Breite derBreite des Wickelkerns entspricht. Die Vertiefungen haben zweckmäßigerweise schräge Anlaufborde (11) auf beiden Seiten, so daß auf diese Weise die Wickelkerne ohne zu haken aufgeschoben und auch wieder in axialer Richtung abgenommen werden können.

Auf diese Weise sind die neuerungsgemäßen Aufgaben vollständig erfüllt.

## Patentansprüche

1. Spannvorrichtung für Wickelkerne, bestehend aus einer Wickelwelle mit auf ihr drehbar und antreibbar gelagerten Einzelwickelkörpern als Kernaufnahme für Wickelkerne mit inneren zylindrischen Bohrungen, wobei die Spannvorrichtung Maßnahmen zum Einrasten der Wickelkerne in axialer Richtung auf jedem Einzelwickelkörper enthält, dadurch gekennzeichnet, daß der Wickelkern (1) entlang seinem Innenumfang (3) benachbart der inneren Bohrung (5) gleichmäßig über den Umfang verteilt eine Vielzahl federelastischer Elemente (2) enthält, welche die Gestalt eines abgeknickten Arms besitzen, der in radialer Richtung vom Innenumfang (3) des Wickelkerns (1) ausgeht und in Umfangsrichtung abgeknickt ist und wobei das Ende (4) jedes federelastischen Arms von der Knickstelle des nächstfolgenden Arms beabstandet ist.

2. Spannvorrichtung nach Anspruch 1, dadurch gekennzeichnet, daß das Ende (4) der federelastischen Arme einen in Richtung der Kernaufnahme (6) radial vorstehenden Sporn (7) enthält.

3. Spannvorrichtung nach den Ansprüchen 1 bis 2, dadurch gekennzeichnet, daß die Kernaufnahme (6) an ihrem Außenumfang in Umfangsrichtung verteilt axial verlaufende Stufen (8) besitzt, die mit den Spornen (7) der Federenden (4) oder mit den Ausnehmungen zwischen den Federarmen einrastbar antreibbar zusammenwirken.

4. Spannvorrichtung nach den Ansprüchen 1 bis 2, dadurch gekennzeichnet, daß die Kernaufnahme (6) an ihrem Außenumfang ein oder mehrere radial federbelastete Kugeldruckstücke (14) einrastbar in den Abstand zwischen zwei Federarme aufweist.

5. Spannvorrichtung nach den Ansprüchen 1 bis 3, dadurch gekennzeichnet, daß die Anordnung der Federarme (2) und deren gegenseitiger Abstand so beschaffen sind, daß die Wickelkerne auf die Aufnahmeachse einer Wickelvorrichtung aufsteckbar sind, welche mit mehreren gegeneinander versetzten Vorsprüngen als Mitnehmerelemente versehen sind.

6. Spannvorrichtung nach den Ansprüchen 1 bis 4, dadurch gekennzeichnet, daß jeder Einzelwickelkörper (9) eine Kernaufnahme (6) enthält, welche eine kreiszylindrische Vertiefung (10) aufweist, die der Breite des Wickelkerns (1) entspricht und die beidseitig mit schrägen Anlaufborden (11) zur axialen Aufnahme der Wickelkerne gestaltet ist.
